# EUROPEAN PATENT APPLICATION

(11) **EP 3 115 599 A1**
(43) Date of publication of application: **11.01.2017**
(21) Application number: 14885053.0
(22) Date of filing: 04.03.2014
(51) Int. Cl.: F03D 13/00

(54) **WIND POWER GENERATION DEVICE**

(71) Applicant: The Chugoku Electric Power Co., Inc., Hiroshima-shi, Hiroshima 730-8701 (JP)
(72) Inventor: WADA, Yasutaka, Hiroshima-shi Hiroshima 730-8701 (JP); KUBOTA, Haruhito, Hiroshima-shi Hiroshima 730-8701 (JP); YAMAMURA, Yukimasa, Hiroshima-shi Hiroshima 730-8701 (JP); UCHIYAMA, Ichiro, Hiroshima-shi Hiroshima 730-8701 (JP); OYAMA, Keiji, Hiroshima-shi Hiroshima 730-8701 (JP); YAMASAKI, Toshiki, Hiroshima-shi Hiroshima 730-8701 (JP)
(74) Representative: Osha Liang
(86) International application number: PCT/JP2014/055477
(87) International publication number: WO 2015/132882

(57) **Abstract**

[Problem] To suppress a boundary layer separation phenomenon that occurs in a blade suction surface, while suppressing influence to airflow flowing along a blade pressure surface of a windmill blade.

[Solution] A wind power generator in which lift-type windmill blades attached radially to a rotary shaft receive wind and rotate, to drive a generator to generate electric power, the wind power generator includes: protruding parts that protrude from a blade suction surface of the windmill blades in a region on a leading edge side of the windmill blades and on the rotary shaft side of the windmill blades in a longitudinal direction.

## Description

### Technical Field

The present invention relates to wind power generators.

### Background

With a wind power generator including lift-type windmill blades, when speed of air current flowing along a blade suction surface is faster than speed of air current flowing along a blade pressure surface, lift toward the blade suction surface is formed. With this lift the windmill blades rotate to drive a generator, and the wind power energy is converted to electric energy. Depending on such as a direction of wind that the windmill blades receive, a boundary layer separation phenomenon in which an airflow separates from the blade suction surface occurs, and rotation efficiency of the windmill blades deteriorates. Thus, a windmill is proposed in which turbulence forming accelerating parts (projections and depressions part) are formed in the leading edge (a most-tip end part) of the windmill blades, and a laminar airflow near the leading edge of the windmill blades are made as turbulent flow, to suppress the boundary layer separation phenomenon that occurs in the blade suction surface (for example, refer to PTL 1).

### Citation List

### Patent Literature

PTL 1: Patent Application Laid-open Publication No. 2003-227453

### Summary

### Technical Problem

However, when the turbulence forming accelerating parts are formed in the leading edge of the windmill blades, as in PTL 1, the turbulent flow is formed in a point that is too further forward than the point where the separation starts on the blade suction surface, and thus there is a possibility that the boundary layer separation phenomenon that occurs in the blade suction surface cannot be suppressed. Further, there is a possibility that the airflow that flows along the blade pressure surface may receive a bad influence.

This invention has been made in view of the above matters, and an object is to suppress a boundary layer separation phenomenon that occurs in a blade suction surface, while suppressing influence to an airflow flowing along a blade pressure surface of a windmill blade.

### Solution to Problem

An aspect of this invention to achieve the above object is a wind power generator in which lift-type windmill blades attached radially to a rotary shaft receive wind and rotate, to drive a generator to generate electric power, the wind power generator including: protruding parts that protrude from a blade suction surface of the windmill blades in a region on a leading edge side of the windmill blades and on the rotary shaft side of the windmill blades in a longitudinal direction.

With this wind power generator, a boundary layer separation phenomenon that occurs in the blade suction surface can be suppressed with a vortex (a turbulent flow) that occurs when an airflow flowing along the blade suction surface collides with the protruding parts, while suppressing influence to an airflow flowing along a blade pressure surface of the windmill blade. Further, the boundary layer separation phenomenon that frequently occurs in a section to a blade root part side (a rotary shaft side) than a section to a blade tip end part side of the blade suction surface can be suppressed.

The wind power generator, wherein the protruding parts are provided in a region, of the blade suction surface, nearer to the leading edge side than a position where a blade thickness from the blade suction surface to a blade pressure surface is thickest.

With this wind power generator, the probability that the protruding parts are positioned to the upstream side than a separation start point in the blade suction surface is high, and the boundary layer separation phenomenon that occurs in the blade suction surface can be more certainly suppressed.

The wind power generator, wherein the protruding parts can protrude from and retract in the blade suction surface.

With this wind power generator, when a boundary layer separation phenomenon is occurring in the blade suction surface, the protruding parts are protruded from the blade suction surface to suppress the boundary layer separation phenomenon, and when the boundary layer separation phenomenon is not occurring in the blade suction surface, a part or the whole of the protruding parts are retracted in the windmill blade, to make the resistance to an airflow flowing along the blade suction surface small.

The wind power generator, wherein when a boundary layer separation phenomenon or a precursory phenomenon thereof occurs in the blade suction surface, the protruding parts protrude from the blade suction surface, and the protruding parts are retracted in the windmill blades, after the boundary layer separation phenomenon has resolved and after a predetermined time has passed from when the protruding parts have protruded from the blade suction surface, or after a predetermined time has passed from when the boundary layer separation phenomenon has resolved.

With this wind power generator, the boundary layer separation phenomenon occurring in the blade suction surface can be suppressed, and when the boundary layer separation phenomenon is not occurring in the blade suction surface, the resistance to an airflow flowing along the blade suction surface can be made small.

The wind power generator, wherein the protruding parts protrude from the blade suction surface due to a difference between a pressure inside the windmill blades and a pressure above the blade suction surface.

With this wind power generator, a mechanism to make the protruding parts protrude from and retract in the blade suction surface can be simplified, and power can be saved.

Other features of this invention will become clear from the attached drawings and descriptions in this specification.

### Advantageous Effects of Invention

According to an aspect of this invention, a boundary layer separation phenomenon that occurs in a blade suction surface can be suppressed, while suppressing influence to an airflow flowing along a blade pressure surface of a windmill blade.

### Brief Description of Drawings

[Fig. 1] Fig. 1 is a schematic perspective view of a wind power generator.
[Fig. 2] Fig. 2 is a plan view of a windmill blade.
[Fig. 3A] Fig. 3A is a diagram describing an airflow around a section of a windmill blade along line A-A in Fig. 2.
[Fig. 3B] Fig. 3B is a diagram describing an airflow around a section of a windmill blade along line B-B in Fig. 2.
[Fig. 4] Fig. 4 is a sectional view of a windmill blade along line B-B in Fig. 2.
[Fig. 5] Fig. 5 is a diagram showing vortexes that are caused in a blade suction surface with protruding parts.
[Fig. 6A] Fig. 6A is an explanatory view of a mechanism that causes a protruding part to protrude from and retract in a blade suction surface.
[Fig. 6B] Fig. 6B is an explanatory view of a mechanism that causes a protruding part to protrude from and retract in a blade suction surface.
[Fig. 6C] Fig. 6C is an explanatory view of a mechanism that causes a protruding part to protrude from and retract in a blade suction surface.
[Fig. 6D] Fig. 6D is an explanatory view of a mechanism that causes a protruding part to protrude from and retract in a blade suction surface.

### Description of Embodiments

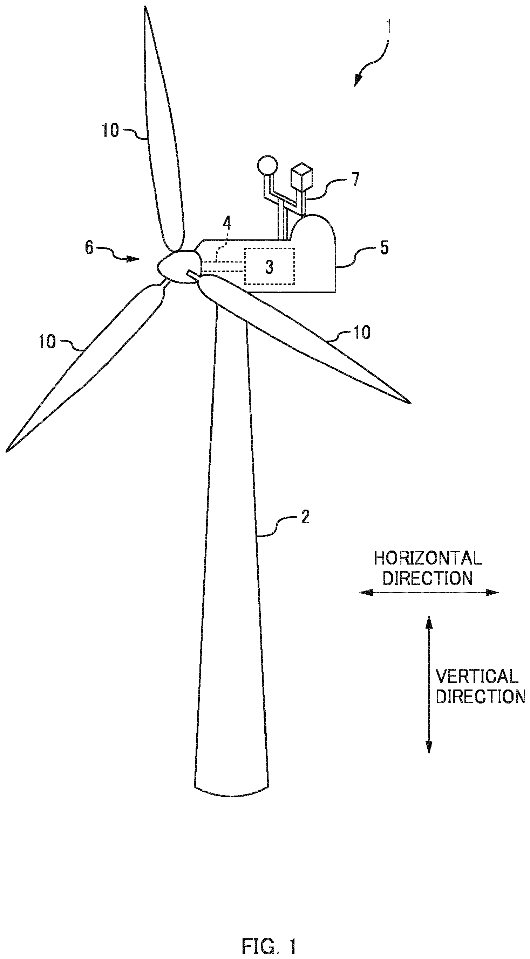

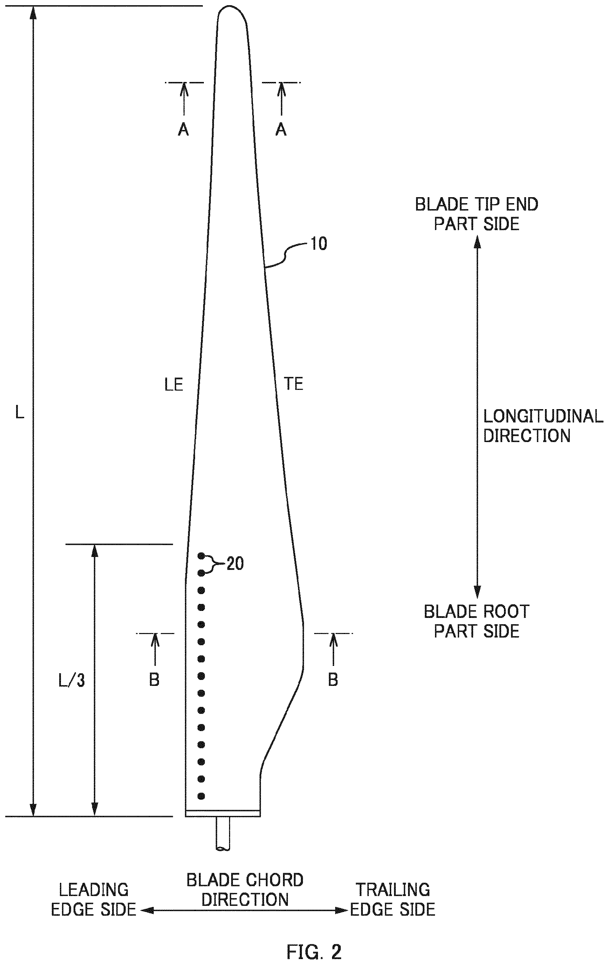

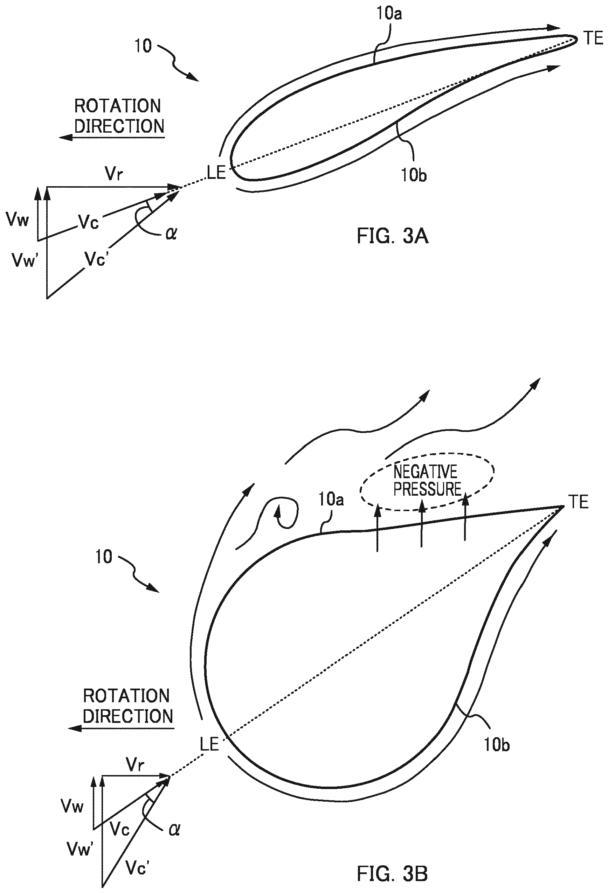

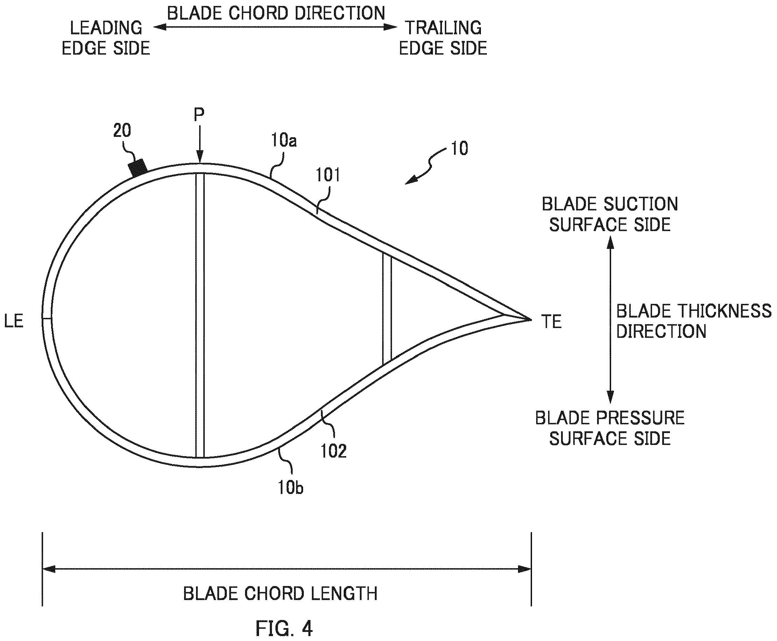

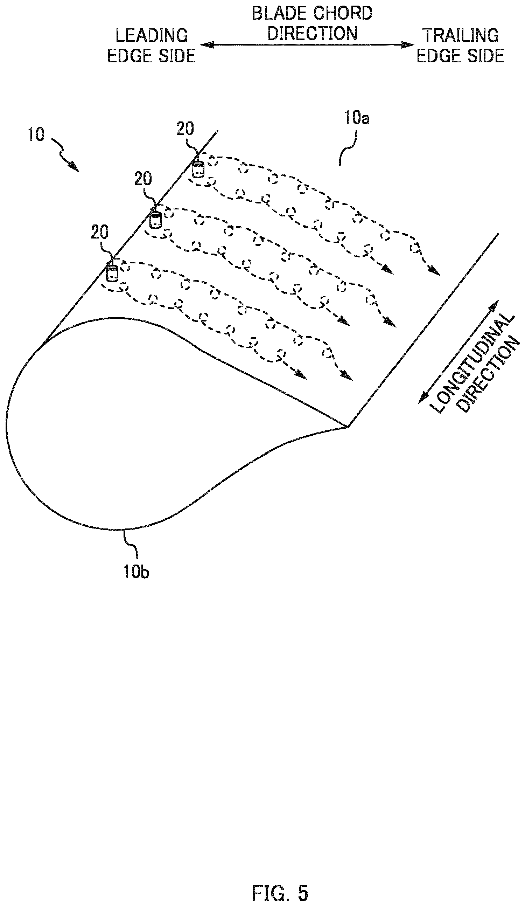

Fig. 1 is a schematic perspective view of a wind power generator 1. Fig. 2 is a plan view of a windmill blade 10. Fig. 3A is a diagram describing an airflow around a section of a windmill blade 10 along line A-A in Fig. 2. Fig. 3B is a diagram describing an airflow around a section of a windmill blade 10 along line B-B in Fig. 2. Fig. 4 is a sectional view of a windmill blade 10 along line B-B in Fig. 2. Fig. 5 is a diagram showing vortexes that are caused in a blade suction surface 10a with protruding parts 20.

### «Wind power generator 1»

The wind power generator 1 includes a tower 2 installed on a base such as the ground, a nacelle 5 installed to a tip part of the tower 2 and housing such as a generator 3 and a rotary shaft 4 of the generator, a rotor 6 that has three lift-type windmill blades 10 and rotates around the rotary shaft 4 elongated in a horizontal direction, and an anemometer 7 attached to the nacelle 5. The windmill blades 10 are attached radially such that the longitudinal direction is along a radial direction of the rotary shaft 4. In other words, the wind power generator 1 of the present embodiment is a generator using a horizontal axis lift-type windmill. It should be noted that, the direction in which the rotary shaft 4 is elongated is not limited to the horizontal direction, and may be a direction inclined from the horizontal direction. Further, the number of the windmill blades 10 is not limited to three.

In the below description, a linear direction that connects a leading edge LE (a most tip end part) and a trailing edge TE (a most rear end part) of the windmill blade 10 is referred to as a "blade chord direction", a length of a line connecting the leading edge LE and the trailing edge TE is referred to as a "blade chord length", a direction that intersects a plane formed in the longitudinal direction and the blade chord direction of the windmill blades 10 (namely, a direction perpendicular to a paper plane in Fig. 2) is referred to as a "blade thickness direction", a length in the blade thickness direction from a blade suction surface 10a to a blade pressure surface 10b is referred to as a "blade thickness", a section on the rotary shaft 4 side in the longitudinal direction of the windmill blade 10 is referred to as a "blade root part" and the opposite side section is referred to as a "blade tip end part".

The windmill blade 10 is formed such that the blade suction surface 10a and the blade pressure surface 10b form a streamline shape over an entire length in the longitudinal direction. In more detail, as shown in Fig. 4, the blade thickness becomes gradually thicker from the leading edge LE toward the trailing edge TE, and after the blade becomes thickest at a position P, the blade thickness becomes gradually thinner toward the trailing edge TE. It should be noted that, with the windmill blade 10 of this embodiment, a circumferential edge of a suction side member 101 forming the blade suction surface 10a and a circumferential edge of a pressure side member 102 forming the blade pressure surface 10b are joined by such as welding, and a closed space is formed inside the windmill blade 10 with the suction side member 101 and the pressure side member 102. Further, as shown in Fig. 2, in the windmill blade 10, the blade chord length gradually decreases and the blade thickness is made thinner from the blade root part toward the blade tip end part.

When the windmill blade 10 receives wind, and an airflow flows from the leading edge LE to the trailing edge TE of the windmill blade 10, a lift toward an outer side of the blade suction surface 10a is generated due to a speed difference between airflows in the blade suction surface 10a side and the blade pressure surface 10b side. As a result, the windmill blade 10 (the rotor 6) rotates with the rotary shaft 4, and the rotational force of the rotary shaft 4 is transmitted to the generator 3, and the generator 3 is driven to generate electric power. <<Boundary layer separation phenomenon in blade suction surface 10a>>

As shown in Fig. 3, the windmill blade 10 receives a combined airflow Vc of an airflow Vw that occurs naturally from wind and an airflow Vr that occurs from rotation of the windmill blade 10. As an angle of attack α that is an angle formed by the direction of the combined airflow Vc and the blade chord direction becomes larger, the lift of the windmill blade 10 increases, and the rotational force of the windmill blade 10 increases. When the angle of attack α is equal to or greater than a predetermined angle, however, the airflow does not flow along the blade suction surface 10a, and a boundary layer separation phenomenon in which the airflow separates from the blade suction surface 10a occurs, and the lift of the windmill blade 10 decreases.

Thus, in the wind power generator, for example, such as a pitch control that adjusts an attachment angle (pitch angle) of the windmill blades 10 such that the windmill blades 10 are connected rotatably with respect to the rotary shaft 4 and an optimal angle of attack α is made according to wind direction and wind speed, and a yaw control to change the direction of the rotor 6 (the nacelle 35) according to the wind direction such that the rotor 6 can receive wind from the front are performed. But, for example, in a region where the wind direction and wind speed changes greatly, such as in a mountainous region of Japan, pitch control and yaw control cannot cope with this situation, and there is a problem that a boundary layer separation phenomenon in the blade suction surface 10a occurred frequently.

When a boundary layer separation phenomenon occurs in the blade suction surface 10a, as shown in Fig. 3B, a pressure above the blade suction surface 10a decreases, and a negative pressure region is formed. Thus, a pressure difference is made between a space in the blade and above the blade suction surface 10a, and a force pulling the blade suction surface 10a to the outer side is applied to the blade suction surface 10a (a suction side member 101). Then, rotation of the windmill decreases, the outer shape of the blade suction surface 10a deforms, or a fracture forms in the leading edge LE section of the windmill blade 10 in which the suction side member 101 and the pressure side member 102 are joined as in this embodiment, and the windmill blade 10 may be damaged.

In particular, the blade root part (Fig. 3B) of the windmill blade 10 has a slower rotational speed compared to the blade tip end part (Fig. 3A), and the speed of the airflow Vr due to the rotation of the windmill blade 10 is slow. Thus, the blade root part has a greater angle of attack α compared to the blade tip end part, and the pitch control may not cope with this situation. Additionally, since the ratio of decrease in speed (Vc' → Vc) of the combined airflow is large due to the decrease in speed of natural wind (Vw' → Vw), the wind speed easily decreases, and the boundary layer separation phenomenon easily occurs. Further, since the blade root part with slow rotational speed has a low Reynolds number compared to the blade tip end part, and a laminar boundary layer is formed in the periphery of the blade root part, the boundary layer separation phenomenon easily occurs in the blade root part, and the blade root part has a section with a large curvature compared to the blade tip end part with a thin blade thickness. This also makes the boundary layer separation phenomenon occur easily in the blade suction surface 10a in the blade root part compared to the blade tip end part.

### «Protruding parts 20 of windmill blade 10»

With the wind power generator 1 in this embodiment, to suppress the boundary layer separation phenomenon that occurs in the blade suction surface 10a, as shown in Fig. 2 and Fig. 4, the protruding parts 20 are provided fixed in a section on the blade root part side (a rotary shaft side 4) in the longitudinal direction of the windmill blade 10, on the leading edge side of the windmill blade 10, of the blade suction surface 10a of the windmill blade 10. The protruding parts 20 are protruded from the blade suction surface 10a toward the outer side in a direction intersecting the blade suction surface 10a.

It should be noted that, the blade suction surface 10a is a section excluding the leading edge LE and the trailing edge TE of the windmill blade 10. Further, the section on the leading edge side of the blade suction surface 10a refers to the section on the leading edge side than the central part of the windmill blade 10 in the blade chord direction, and the section is preferably within a range elongated from the leading edge LE of the windmill blade for a length of 1/3 of the blade chord length along the blade chord direction to the trailing edge TE side. In this embodiment, as shown in Fig. 4, the protruding parts 20 are provided in the section on the leading edge side than a thickest position of the blade P in which the thickness of the blade from the blade suction surface 10a to the blade pressure surface 10b becomes thickest of the blade suction surface 10a.

Further, the section on the blade root part side of the blade suction surface 10a is the section on the blade root part side than the central part of the windmill blade 10 in the longitudinal direction. In this embodiment, as shown in Fig. 2, the plurality of the protruding parts 20 are provided aligned with an interval in between in the longitudinal direction, over a range from an end in the blade root part side of the windmill blade 10 on the blade tip end side along the longitudinal direction by a length (L/3) that is 1/3 of an entire length (L) of the windmill blade 10.

By the way, a boundary layer separation phenomenon more easily occurs when an airflow flowing above the blade suction surface 10a is a laminar flow than a turbulent flow. In the turbulent boundary layer, due to a vortex motion of a turbulent airflow, a high-speed turbulent airflow and an airflow with a small momentum that has almost stopped near a wall surface are combined, and exchange of momentum is greatly performed. Thus, since a momentum is supplied to air near the wall surface and flow is ensured, separation does not easily occur in the turbulent boundary layer than in the laminar boundary layer. Thus, by providing the protruding parts 20 to the blade suction surface 10a, as in the windmill blade 10 of this embodiment, the airflow flowing above the blade suction surface 10a collides with the protruding parts 20, and as shown in Fig. 5, a vortex (turbulent flow) can be made above the blade suction surface 10a, and with the vortex a turbulent airflow can be made above the blade suction surface 10a and the boundary layer separation phenomenon that occurs in the blade suction surface 10a can be suppressed. As a result, deterioration of rotation efficiency of the windmill blade 10 can be suppressed. Further, decrease in pressure above the blade suction surface 10a as shown in Fig. 3B can be suppressed, and a pulling force of the blade suction surface 10a to the outer side can be decreased, and thus damage to the windmill blade 10 can be suppressed.

It should be noted that, the protruding parts 20 are a cylindrical shape in Fig. 2 and Fig. 4, but it is not limited thereto. The shape may be any shape as long as a vortex (turbulent flow) can be made with the protruding parts 20, and may be, for example, a triangular cone shape, a prismatic shape, or a plate shape that is triangular in section when viewed in the longitudinal direction. Further, by placing the protruding parts 20 aligned in the longitudinal direction apart to a degree that a vortex formed by each of the protruding parts 20 does not interfere with each other, the attenuation of the vortex can be suppressed. Further, the height of the protruding parts 20 may be set to a height which causes a vortex that can mix a boundary laminar flow above the blade suction surface 10a and the airflow that has separated from the blade suction surface 10a.

Here, supposing that protruding parts are provided to the leading edge LE of the windmill blade 10. Then, a vortex (turbulent flow) occurs in a point apart from a separation start point above the blade suction surface 10a, thus a vortex is attenuated in the separation start point, and there is a possibility that the vortex attenuates in the separation start point, and the boundary layer separation phenomenon that occurs above the blade suction surface 10a cannot be suppressed. Further, when protruding parts are provided to the leading edge LE of the windmill blade 10, there is a possibility that a vortex also flows in to the blade pressure surface 10b side and may have a bad influence. On the other hand, when the protruding parts are provided to a section on the trailing edge side of the blade suction surface 10a, there is a high possibility that the protruding parts may be positioned in a section to the downstream side than the separation start point, namely, a section in which the airflow has separated from the blade suction surface 10a. Then, the airflow does not come in contact with the protruding parts, and a vortex cannot be made with the protruding parts, and the boundary layer separation phenomenon that occurs in the blade suction surface 10a cannot be suppressed. In contrast to this, with the windmill blade 10 of this embodiment, by providing the protruding parts 20 to a section on the leading edge side of the windmill blade 10 of the blade suction surface 10a, it is possible to suppress influence on the airflow flowing along the blade pressure surface 10b, while preventing the vortex generation point with the protruding parts 20 from being too far forward from the separation start point and attenuating the vortex, or the protruding part 20 from being positioned to the downstream side of the separation start point to not be able to cause the vortex. Thus, the boundary layer separation phenomenon that occurs in the blade suction surface 10a can be suppressed.

Further, because the blade root part of the windmill blade 10 typically has a large curvature in section compared to the blade tip end part, and the inclination directions of the blade suction surface 10a greatly differ on both sides of the thickest blade position P, a boundary layer separation phenomenon easily occurs near the thickest blade position P. Thus, as in the windmill blade 10 of this embodiment, by providing the protruding parts 20 to a section on the leading edge side than the thickest position P of the blade suction surface 10a, the probability that the protruding parts 20 are positioned to an upstream side position than the separation start point in the blade suction surface 10a increases. The boundary layer separation phenomenon that occurs in the blade suction surface 10a can accordingly be more certainly suppressed.

Further, while the protruding parts 20 provided to the blade suction surface 10a act to suppress the boundary layer separation phenomenon, they also resist the airflow flowing along the blade suction surface 10a. Thus, as in the windmill blade 10 of this embodiment, the protruding parts 20 are to be provided to only the section on the blade root part side of the blade suction surface 10a, and the protruding parts 20 are not to be provided to the section to the blade tip end part side. In this way, the boundary layer separation phenomenon that occurs frequently in the blade root part can be suppressed, and also the resistance to the airflow flowing along the blade tip end part can be made small. Further, since the boundary layer separation phenomenon does not easily occur in the blade tip end part compared to the blade root part, even without providing the protruding parts 20, there is little possibility of such as damage to the windmill blade 10, and no problem arises.

### «Modified Example of protruding part 20»

In the above embodiment, the protruding parts 20 are provided fixed to the blade suction surface 10a. The protruding parts 20 provided to the blade suction surface 10a, however, also resist the airflow flowing along the blade suction surface 10a. Thus, the protruding parts 20 can be made to protrude from and retract in the blade suction surface 10a. Then, when the boundary layer separation phenomenon is occurring in the blade suction surface 10a, the protruding parts 20 can be moved to an outer side (a side where the protruding parts 20 protrude) in a direction intersecting the blade suction surface 10a, and the protruding parts 20 can be made to protrude from the blade suction surface 10a, in order to suppress the boundary layer separation phenomenon occurring in the blade suction surface 10a. On the other hand, when the boundary layer separation phenomenon is not occurring in the blade suction surface 10a, the protruding parts 20 can be moved to an inner side of the windmill blade 10 in the direction intersecting the blade suction surface 10a, and the height of the protruding parts 20 protruding from the blade suction surface 10a can be lowered, or the entire protruding parts 20 can be retracted in the windmill blade 10, to make the resistance to the airflow flowing along the blade suction surface 10a small, and deterioration of the rotation efficiency of the windmill blade 10 can be suppressed.

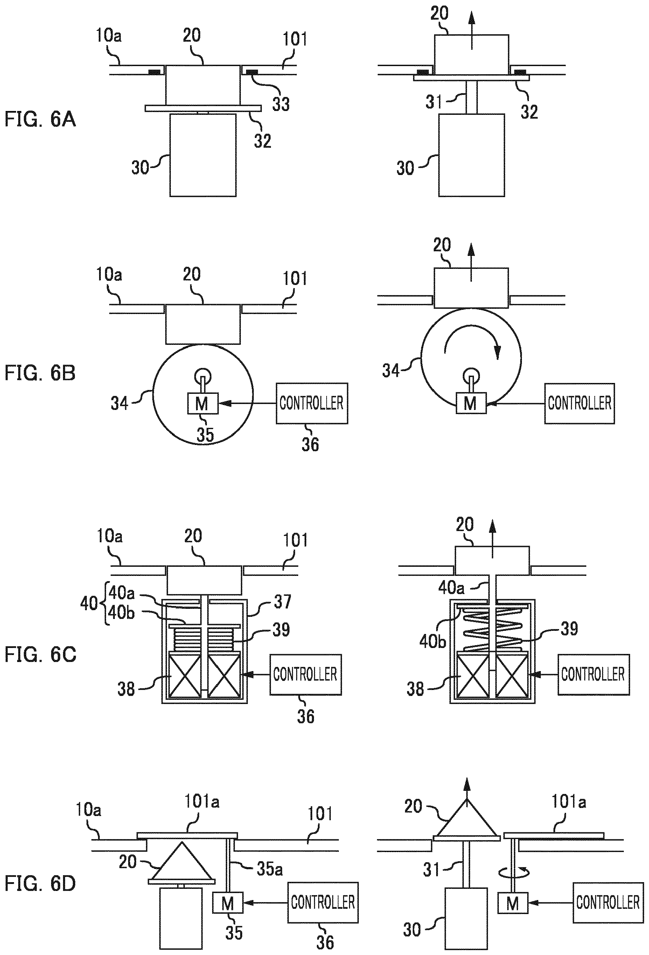

Fig. 6A to Fig. 6D are diagrams describing a mechanism to make the protruding parts 20 protrude from and retract in the blade suction surface 10a. It should be noted that, the actual blade suction surface 10a is a curved surface, but in Fig. 6 the blade suction surface 10a is shown as a plane to simplify the description. The mechanism shown in Fig. 6 is one example, and the mechanism can be any mechanism as long as the protruding parts 20 can protrude from and retract in the blade suction surface 10a. The protruding parts 20 in Fig. 6A to Fig. 6C are cylindrical shapes, and upper surfaces of the protruding parts 20 form a part of the blade suction surface 10a. A hole in which the protruding part 20 can pass through is formed in the suction side member 101.

For example, the mechanism shown in Fig. 6A includes a fixed part 30 accommodated in the windmill blade 10, an operating shaft 31 that can move in the up-down direction in respect to the fixed part 30, and a base 32 connected to a tip end of the operating shaft 31 and on which the protruding part 20 is placed. When the boundary layer separation phenomenon occurs on the blade suction surface 10a, the pressure above the blade suction surface 10a lowers as shown in Fig. 3B described above. Thus, in the mechanism shown in Fig. 6A, the difference between the pressure inside the windmill blade 10 and the pressure above the blade suction surface 10a is used, to move the protruding part 20 in the up-down direction (a direction intersecting the blade suction surface 10a). Specifically, when the boundary layer separation phenomenon occurs in the blade suction surface 10a and the pressure above the blade suction surface 10a lowers, the protruding part 20 is pulled upward and moves upward with the base 32 and the operating shaft 31, and protrudes from the blade suction surface 10a. At this time the movement of the protruding part 20 is restricted by the base 32 and the suction side member 101 coming into contact. Then, when the boundary layer separation phenomenon is resolved and the pressure above the blade suction surface 10a increases, the protruding part 20 moves downward with the base 32 and the operating shaft 31 due to its own weight and is retracted in the windmill blade 20. At this time, the movement of the protruding part 20 is restricted with the base 32 and the fixed part 30 coming into contact, and the upper surface of the protruding part 20 and the upper surface of the suction side member 101 become a flat surface. In this way, by using the difference in the pressure inside the windmill blade 10 and the pressure above the blade suction surface 10a and making the protruding part 20 protrude and retract, the mechanism of making the protruding part 20 protrude and retract can be simplified. Further, because a motor and the like is not used, power saving is possible. It is not limited to the above, however, and for example, a hydraulic cylinder and the like can be used to move the protruding part 20 and the operating shaft 31 in the up-down direction.

Further, when the boundary layer separation phenomenon occurs, separation and re-contact of the airflow to the blade suction surface 10a is repeated, and there is a case where pressure fluctuation becomes great above the blade suction surface 10a. In that case, movement in the up-down direction of the protruding parts 20 are repeated in a short period of time, and vortexes cannot be made stably, or may lead to breakage of the protruding and retracting mechanism. In view of this, when the protruding parts 20 protrude once due to lowering of pressure above the blade suction surface 10a, the protruding state of the protruding parts 20 may be maintained for a predetermined time. Alternatively, the protruding state of the protruding part 20 may be maintained for a predetermined time even after the boundary layer separation phenomenon has resolved. To achieve this, for example, as shown in Fig. 6A, the base 32 may be a magnetic member, and the electromagnet 33 may be provided in a section of the suction side member 101 that comes in contact with the base 32. In this way, in the period from when the base 32 and the suction side member 101 come into contact and until a predetermined time has passed, the electromagnet 33 is in made to be an ON state and the base 32 is attracted to the suction side member 101, and after a predetermined time has passed, the electromagnet 33 is made to be an OFF state and the attracted state of the suction side member 101 and the base 32 can be resolved.

Further, the mechanism is not limited to that shown in Fig. 6A, and for example, as shown in Fig. 6B, a mechanism that includes an eccentric cam 34, a motor 35, and a controller 36 may be used. In this case, the controller 36 detects the boundary layer separation phenomenon in the blade suction surface 10a, for example, and the motor 35 is driven to rotate the eccentric cam 34 to move upward the protruding part 20 that is in contact with a peripheral edge of the eccentric cam 34 and make the protruding part 20 protrude from the blade suction surface 10a. Further, when the controller 36 detects that the boundary layer separation phenomenon in the blade suction surface 10a has been resolved, for example, it drives the motor 35 again to rotate the eccentric cam 34, thus being able to move the protruding part 20 downward and retract the protruding part 20 in the windmill blade 10.

Further, for example, as shown in Fig. 6C, a mechanism may include a controller 36, a housing 37 retracted in a windmill blade 10, an electromagnetic solenoid 38 provided in the housing 37, a spring 39, and an operating shaft 40. The operating shaft 40 includes a shaft part 40a connected with a protruding part 20 in a tip end and a locking part 40b protruding from the middle of the shaft part 40a. The spring 39 is passed through the shaft part 40a lower than the locking part 40b. In this case, the controller 36 demagnetizes a coil of the electromagnetic solenoid 38, in order to move the operating shaft 40 upward by a restoring force of the spring 39, and accordingly the protruding part 20 can be made to protrude from the blade suction surface 10a. Further, the controller 36 excites the coil of the electromagnetic solenoid 38 to move the operating shaft 40 downward against the restoring force of the spring 39, and accordingly the protruding part 20 can be retracted in the windmill blade 10.

Further, in Fig. 6A to Fig. 6C, the cylindrical protruding part 20 is given as an example, but it is not limited thereto, and for example, the protruding part 20 may be a triangular cone shape as shown in Fig. 6D. In this case, however, when the protruding part 20 is retracted in the windmill blade 10, a hole provided in the suction side member 101 to let the protruding part 20 pass through cannot be closed. In view of this, a part of the suction side member 101 can be made as a lid member 101a that is openable and closable, and when making the protruding part 20 protrude, a motor 35 with a rotary shaft 35a connected to the lid member 101a may be rotated to open the lid member 101a, and the lid member 101a can be closed in the period in which the protruding part 20 is retracted in the windmill blade 10.

Further, when the controller 36 is controlling movement of the protruding part 20, the controller 36 needs to detect the boundary layer separation phenomenon. As described above, when the angle of attack α becomes too great, the boundary layer separation phenomenon occurs. Thus, for example, by calculating the angle of attack α based on the value measured by the anemometer 7, the boundary layer separation phenomenon can be detected. Specifically, the controller 36 can perform control to determine that the boundary layer separation phenomenon is occurring when the calculated angle of attack α is equal to or greater than a threshold value and make the protruding part 20 protrude from the blade suction surface 10a, and the controller 36 can determine that the boundary layer separation phenomenon has resolved when the calculated angle of attack α is smaller than a threshold value and retract the protruding part 20 in the windmill blade 10. Further, to more accurately detect the boundary layer separation phenomenon, in the case of the wind power generator 1 performing pitch control or yaw control, the angle of attack α may be calculated in consideration of the attaching angle of the windmills blade 10 and the orientation of the rotor 6, in addition to the wind direction and the wind speed.

Further, when the boundary layer separation phenomenon occurs, the pressure above the blade suction surface 10a decreases. Thus, a pressure sensor (not shown) that measures pressure above the blade suction surface 10a may be provided above the blade suction surface 10a, in order to detect occurrence and resolving of the boundary layer separation phenomenon based on the measurement value of the pressure sensor. Further, when the boundary layer separation phenomenon occurs, separation and re-contacting of the airflow to the blade suction surface 10a are repeated, and vibration above the blade suction surface 10a occurs. Thus, a vibration sensor (not shown) that measures vibration on the blade suction surface 10a may be provided to the blade suction surface 10a, and the occurring and resolving of the boundary layer separation phenomenon may be detected based on measurement values of the vibration sensor.

Further, there are cases where measurement values of such as the wind direction and wind speed, pressure, and vibration change in a short period of time, and movement of the protruding part 20 is repeated in a short period of time, or a vortex cannot be stably made, or cause damage to the protruding and retracting mechanism. Thus, after a predetermined time has passed after the controller 36 makes the protruding part 20 protrude from the blade suction surface 10a, the controller 36 may retract the protruding part 20 in the windmill blade 10. By doing so, the movement of the protruding part 20 being repeated in a short period of time can be prevented. Further, resolving of the boundary layer separation phenomenon does not have to be detected, and thus the controller 36 can be easily controlled. The predetermined time from when the protruding part 20 is protruded from the blade suction surface 10a to when the protruding part 20 is retracted in the windmill blade 10 is equal to or greater than a time needed for the protruding part 20 to resolve the boundary layer separation phenomenon, and it may be determined based on such as calculation and experience. Alternatively, after the controller 36 has detected that the boundary layer separation phenomenon has been resolved, the protruding part 20 does not have to be retracted in the windmill blade 10 immediately, and the protruding part 20 can be retracted in the windmill blade 20 at a timing delayed for a predetermined time after the boundary layer separation phenomenon has been resolved. In this way, the protruding part 20 can be retracted after the boundary layer separation phenomenon has been certainly resolved.

Further, the boundary layer separation phenomenon does not have to be detected based on any one of the parameters of the angle of attack α, the pressure above the blade suction surface 10a, and vibration. The boundary layer separation phenomenon may be detected based on a plurality of the parameters. Further, the protruding part 20 may be made to protrude from the blade suction surface 10a at a timing in which a precursory phenomenon of the boundary layer separation phenomenon has been detected based on such as the angle of attack α, the pressure above the blade suction surface 10a, and vibration.

As described above, when the boundary layer separation phenomenon in the blade suction surface 10a or the precursory phenomenon occurs, the protruding part 20 is protruded from the blade suction surface 10a, and after the boundary layer separation phenomenon in the blade suction surface 10a has been resolved, after a predetermined time has passed from when the protruded part 20 has protruded from the blade suction surface 10a, or after a predetermined time has passed from when the boundary layer separation phenomenon has resolved, the protruding part 20 may be retracted in the windmill blade 10. By doing so, the boundary layer separation phenomenon that occurs in the blade suction surface 10a can be suppressed, and the resistance to airflow flowing along the blade suction surface 10a when the separation is not occurring can be made small.

Further, the plurality of the protruding parts 20 aligned in the longitudinal direction in the section on the blade root part side of the blade suction surface 10a can each be movable separately, and a plurality of pressure sensors and vibration sensors to detect the boundary layer separation phenomenon can be arranged with an interval in between in the longitudinal direction. By doing so, the position in which the boundary layer separation phenomenon is occurring in the longitudinal direction of the windmill blade 10 can be specified, only the protruding parts 20 in the region where the boundary layer separation phenomenon is occurring is protruded from the blade suction surface 10a, and the protruding parts 20 in the region where the boundary layer separation phenomenon has not occurred can be retracted in the windmill blade 10. As a result, the boundary layer separation phenomenon that occurs in the blade suction surface 10a can be suppressed, and resistance of airflow flowing along the blade suction surface 10a can be made as small as possible.

Further, in the above embodiment, just one row of the protruding parts 20 along the longitudinal direction is formed in the blade suction surface 10a (Fig. 2), but it is not limited thereto, and a plurality of rows of protruding parts 20 may be aligned with an interval in the direction along the blade suction surface from the leading edge LE to the trailing edge TE. Further, the protruding parts 20 may be provided in a section on the trailing edge side than the blade thickest position P, and only one protruding part 20 may be provided in the blade suction surface 10a. Further, the protruding parts 20 may be provided over an entire region of the blade suction surface 10a in the longitudinal direction.

The above embodiment is to facilitate understanding of this invention, and does not limit the invention in any way. This invention may be changed and modified without departing from the gist thereof, and equivalents of this invention are included.

### Reference Signs List

- 1: wind power generator,
- 2: tower,
- 3: generator,
- 4: rotary shaft,
- 5: nacelle,
- 6: rotor,
- 7: anemometer,
- 10: windmill blade,
- 10a: blade suction surface,
- 10b: blade pressure surface,
- 101: suction side member,
- 102: pressure side member,
- 20: protruding part,
- 30: fixed part,
- 31: operating shaft,
- 32: base,
- 33: electromagnet,
- 34: eccentric cam,
- 35: motor,
- 36: controller,
- 37: housing,
- 38: electromagnetic solenoid,
- 39: spring,
- 40: operating shaft

## Claims

1. A wind power generator in which lift-type windmill blades attached radially to a rotary shaft receive wind and rotate, to drive a generator to generate electric power, the wind power generator comprising:
protruding parts that protrude from a blade suction surface of the windmill blades in a region on a leading edge side of the windmill blades and on the rotary shaft side of the windmill blades in a longitudinal direction.

2. The wind power generator according to claim 1, wherein
the protruding parts are provided in a region, of the blade suction surface, nearer to the leading edge side than a position where a blade thickness from the blade suction surface to a blade pressure surface is thickest.

3. The wind power generator according to claim 1 or 2, wherein
the protruding parts can protrude from and retract in the blade suction surface.

4. The wind power generator according to claim 3, wherein
when a boundary layer separation phenomenon or a precursory phenomenon thereof occurs in the blade suction surface, the protruding parts protrude from the blade suction surface, and
the protruding parts are retracted in the windmill blades, after the boundary layer separation phenomenon has resolved and after a predetermined time has passed from when the protruding parts have protruded from the blade suction surface, or after a predetermined time has passed from when the boundary layer separation phenomenon has resolved.

5. The wind power generator according to claim 3 or 4, wherein
the protruding parts protrude from the blade suction surface due to a difference between a pressure inside the windmill blades and a pressure above the blade suction surface.
